# EUROPEAN PATENT APPLICATION

(11) **EP 4 245 655 A1**
(43) Date of publication of application: **20.09.2023**
(21) Application number: 21892382.9
(22) Date of filing: 12.11.2021
(51) Int. Cl.: B63B 59/10, B25J 11/00, B25J 9/00, B25J 9/10, B25J 9/08, B25J 19/02

(54) **SHIP-CLEANING ROBOT**

(30) Priority: 13.11.2020 KR 20200151809
(71) Applicant: Tas Global Co., Ltd., Busan 46728 (KR)
(72) Inventor: LEE, Dong Wook, Seoul 06098 (KR)
(74) Representative: Keltie LLP
(86) International application number: PCT/KR2021/016585
(87) International publication number: WO 2022/103215

(57) **Abstract**

Disclosed is a ship cleaning robot, in which a first caterpillar module and a second caterpillar module are symmetrically rotated almost equally in a vertical direction in a rear horizontal body through a stabilizer, and thus the rear horizontal body also resists external force and prevent separation from the outer wall as the symmetry is broken when one of the first caterpillar module and the second caterpillar module is separated from the outer wall by the external force, thereby having advantages of maintaining close contact with the outer surface of a ship.

## Description

### [Technical Field]

The disclosure relates to a ship cleaning robot that can move based on the force of a magnet to be attached to the surface of a ship made of a ferromagnetic substance.

### [Background Art]

In general, a ship sails while a lower part of a hull is submerged in seawater. Therefore, various foreign substances such as contaminants or various underwater creatures such as sphagnum and barnacles may be attached to the bottom or lateral sides of the hull located underwater.

Various such foreign substances and underwater creatures attached to the hull not only spoil the beauty of the ship, but also act as resistance when the ship sails, thereby decreasing the speed of the ship and thus largely increasing the fuel consumption of the ship. Accordingly, it is very important to regularly remove various foreign substances and underwater creatures from the hull.

Conventionally, a diver usually has to get into water in person and remove various foreign substances and underwater creatures from the hull in order to clean the outer surface of the hull. Such a conventional cleaning method has problems that a working environment is poor, physical strength is severely exhausted, and cleaning is impossible in a place where tidal currents are strong.

Recently, there has been widely used a cleaning robot that travels while being attached to the outer surface of the hull and performs cleaning.

The robot traveling on the surface of the ship needs to pass a concave surface and a convex surface of the ship as well as a flat surface of the ship.

In the case of a conventional robot, a magnet provided in the robot moves away from the surface of a ship made of a ferromagnetic substance while traveling on the concave or convex surface, and thus attractive force between the magnet and the surface of the ship becomes weaker, thereby causing a problem that the robot is partially or entirely separated from the surface of the ship.

As above, when the robot is unintentionally separated during the cleaning, it takes much manpower and time to retrieve and attach the robot.

### (Documents of Related Art)

### (Patent Documents)

(Patent document 1) Korean Patent No. 10-1620459
(Patent document 2) Korean Patent No. 10-1269772
(Patent document 3) Korean Patent No. 10-1516542
(Patent document 4) Korean Patent No. 10-1735322
(Patent document 5) Korean Patent No. 10-1958730.

### [Disclosure]

### [Technical Problem]

Accordingly, an aspect of the disclosure is to provide a ship cleaning robot that travels while being in close contact with an outer curved surface of a hull.

### [Technical Solution]

According to an embodiment of the disclosure, there is provided a ship cleaning robot including: a rear horizontal body 420; a first caterpillar module 501 disposed at a right side of the rear horizontal body 420, assembled to be rotatable relative to the rear horizontal body 420 in a vertical direction, and providing propulsive force to move on a hull; a second caterpillar module 502 disposed at a left side of the rear horizontal body 420, assembled to be rotatable relative to the rear horizontal body 420 in the vertical direction, and providing propulsive force to move on the hull; and a stabilizer 600 disposed in the rear horizontal body 420, and allowing the first caterpillar module 501 and the second caterpillar module 502 to symmetrically rotate in the vertical direction.

The first caterpillar module 501 may be disposed to be rotatable in the vertical direction through a first module rotary shaft 541 disposed at the right side of the rear horizontal body 420, and the second caterpillar module 502 may be disposed to be rotatable in the vertical direction through a second module rotary shaft 542 disposed at the left side of the rear horizontal body 420.

The first caterpillar module 501 may include: a first module casing 511 extended in forward and backward directions and opened downwards; a first caterpillar 521 disposed inside the first module casing 511 and forming continuous tracks in the forward and backward directions; a first caterpillar actuator disposed inside the first module casing 511 and circulating the first caterpillar 521; and a first module rotator 531 disposed in the first module casing 511 and rotatably assembled with the rear horizontal body 420, and the first module rotary shaft 541 may be rotatably assembled with the first module rotator 531, and the first module rotary shaft 541 may be disposed in the forward and backward directions.

A first rear magnet 830 may be disposed under the first module rotator 531, and the first rear magnet 830 may be disposed at a right side of the first module rotary shaft 541.

The second caterpillar module 502 may include: a second module casing 512 extended in forward and backward directions and opened downwards; a second caterpillar 522 disposed inside the second module casing 512 and forming continuous tracks in the forward and backward directions; a second caterpillar actuator disposed inside the second module casing 512 and circulating the second caterpillar 522; and a second module rotator 532 disposed in the second module casing 512 and rotatably assembled with the rear horizontal body 420, and the second module rotary shaft 542 may be rotatably assembled with the second module rotator 532, and the second module rotary shaft 542 may be disposed in the forward and backward directions.

A second rear magnet 840 may be disposed under the second module rotator 532, and the second rear magnet 840 may be disposed at a left side of the second module rotary shaft 542.

The first caterpillar module 501 may include: a first module casing 511 extended in forward and backward directions and opened downwards; a first caterpillar 521 disposed inside the first module casing 511 and forming continuous tracks in the forward and backward directions; a first caterpillar actuator disposed inside the first module casing 511 and circulating the first caterpillar 521; and a first module rotator 531 disposed in the first module casing 511 and rotatably assembled with the rear horizontal body 420, and the second caterpillar module 502 may include: a second module casing 512 extended in forward and backward directions and opened downwards; a second caterpillar 522 disposed inside the second module casing 512 and forming continuous tracks in the forward and backward directions; a second caterpillar actuator disposed inside the second module casing 512 and circulating the second caterpillar 522; and a second module rotator 532 disposed in the second module casing 512 and rotatably assembled with the rear horizontal body 420.

The rear horizontal body 420 may further include a supporting column 450 disposed to protrude upwards, and the stabilizer 600 may include: a main link 650 rotatably disposed in the supporting column 450; a main link shaft 655 rotatably connecting the main link 650 and the supporting column 450; a first link 610 rotatably connected to the main link 650 and the first module casing 511; a second link 620 rotatably coupled to the main link 650 and the second module casing 512; a 1-1 hinge 611 rotatably connecting the main link 650 and the first link 610; a 1-2 hinge 612 rotatably connecting the first link 610 and the first module casing 511; a 2-1 hinge 621 rotatably connecting the main link 650 and the second link 620; and a 2-2 hinge 622 rotatably connecting the second link 620 and the second module casing 512.

The 1-2 hinge 612 may be disposed above the first module rotary shaft 541, and the 2-2 hinge 622 may be disposed above the second module rotary shaft 542.

The ship cleaning robot may further include: a front body 200 disposed in front of the rear horizontal body 420; a body shaft 310 rotatably assembled with the front body 200; a body shaft 310 rotatably assembled with the front body 200; and a connection body 300 disposed behind the body shaft 310 and connecting the rear horizontal body 420 and the body shaft 310, wherein the body shaft 310 is disposed in the forward and backward directions, and the front body 200 is rotatable around the body shaft 310 clockwise or counterclockwise when viewed from the front.

The ship cleaning robot may further include: a connection vertical body 410 coupled to the connection body 300 and disposed in the vertical direction, wherein the rear horizontal body 420 is assembled to the connection vertical body 410 and tiltable with respect to the rear horizontal shaft 430, and extended from the connection vertical body 410 leftwards and rightwards, and the rear horizontal shaft 430 is disposed in left and right directions, when viewed from the front, and the connection vertical body 410 is rotated around the rear horizontal shaft 430 in the forward and backward directions.

The ship cleaning robot may further include: a third rear magnet 850 disposed under a front extension portion 425 of the rear horizontal body 420; and a fourth rear magnet 860 disposed under a rear extension portion 426 of the rear horizontal body 420.

The front body 200 may include: a lower front portion 210 under which a front magnet 810 is installed; an upper front portion 220 formed protruding from the lower front portion 210 upwards and rotatably coupling with the connection body 300; and front wings 230 and 240 formed protruding from at least one of the lower front portion 210 or the upper front portion 220 laterally.

The upper front portion 220 may include: a first upper front portion 221 extended from the lower front portion 210 upwards; a second upper front portion 222 detachably coupled to the first upper front portion 221; a lower groove 223 recessed downwards on an upper surface of the first upper front portion 221 and inserting a lower portion of the body shaft 310 therein, and an upper groove 224 recessed upwards on a lower surface of the second upper front portion 222 and inserting an upper portion of the body shaft 310 therein.

The ship cleaning robot may further include: a first coupling guide 311 protruding from a front outer circumferential surface of the body shaft 310 outwards in a radial direction; and a second coupling guide 312 disposed to be spaced backward apart from the first coupling guide 311 and protruding outward in the radial direction of the body shaft 310.

The ship cleaning robot may further include: at least one of a first auxiliary wheel 441 and a second auxiliary wheel 442 rotatably provided in the front extension portion 425, and at least one of a third auxiliary wheel 443 and a fourth auxiliary wheel 444 rotatably provided in the rear extension portion 426.

### [Advantageous Effects]

First, in the ship cleaning robot according to the disclosure, the first caterpillar module and the second caterpillar module are symmetrically rotated almost equally in the vertical direction in the rear horizontal body through the stabilizer, and thus the rear horizontal body also resists external force and prevent separation from the outer wall as the symmetry is broken when one of the first caterpillar module and the second caterpillar module is separated from the outer wall by the external force, thereby having advantages of maintaining close contact with the outer surface of a ship.

Second, in the ship cleaning robot according to the disclosure, the front module 1 is rotatable around the body shaft 310 clockwise or counterclockwise while the rear module 2 is supported on the outer wall of the ship, thereby having advantages of maintaining close contact with the surface of the ship.

Third, in the ship cleaning robot according to the disclosure, the rear module 2 is rotatable around the body shaft 310 clockwise or counterclockwise while the front module 1 is supported on the outer wall of the ship, thereby having advantages of maintaining magnetic force even though an obstacle is encountered during cleaning.

Fourth, in the ship cleaning robot according to the disclosure, the first caterpillar module and the second caterpillar module are assembled to be rotatable relative to the rear horizontal body in the vertical direction, thereby having advantages of easily passing a curved surface of a ship.

Fifth, in the ship cleaning robot according to the disclosure, rotation in place is possible through the first caterpillar module and the second caterpillar module, thereby having advantages of minimizing the movement radius of the ship cleaning robot, and cleaning a cleaning zone more thoroughly.

### [Description of Drawings]

FIG. 1 is a perspective view of a ship cleaning robot according to a first embodiment of the disclosure.
FIG. 2 is a perspective view of the ship cleaning robot of FIG. 1, viewed from below.
FIG. 3 is a front view of the ship cleaning robot of FIG. 1.
FIG. 4 is a left side view of the ship cleaning robot of FIG. 1.
FIG. 5 is a right side view of the ship cleaning robot of FIG. 1.
FIG. 6 is a plan view of the ship cleaning robot of FIG. 1.
FIG. 7 is a bottom view of the ship cleaning robot of FIG. 1.
FIG. 8 is a rear view of the ship cleaning robot of FIG. 1.
FIG. 9 is an exploded perspective view of the ship cleaning robot of FIG. 1.
FIG. 10 is an exploded perspective view of the ship cleaning robot of FIG. 2.
FIG. 11 illustrates an example that the ship cleaning robot according to the first embodiment of the disclosure passes a concave surface with respect to forward and backward directions.
FIG. 12 illustrates an example that the ship cleaning robot according to the first embodiment of the disclosure passes a convex surface with respect to forward and backward directions.
FIG. 13 illustrates a first example that the ship cleaning robot according to the first embodiment of the disclosure is tilted with respect to a body shaft.
FIG. 14 illustrates a second example that the ship cleaning robot according to the first embodiment of the disclosure is tilted with respect to a body shaft.
FIG. 15 illustrates an example that a stabilizer operates when the ship cleaning robot according to the first embodiment of the disclosure passes a flat surface with respect to left and right directions.
FIG. 16 illustrates an example that a stabilizer operates when the ship cleaning robot according to the first embodiment of the disclosure passes a concave surface with respect to left and right directions.
FIG. 17 illustrates an example that a stabilizer operates when the ship cleaning robot according to the first embodiment of the disclosure passes a convex surface with respect to left and right directions.

### [Best Mode]

The merits and features of the disclosure and methods of achieving the merits and features will become apparent from the following embodiments described in detail in conjunction with the accompanying drawings. However, the disclosure is not limited to the following embodiments, but may be implemented in various different ways. The embodiments are provided to merely complete the disclosure and allow a person having ordinary knowledge in the art to which the disclosure pertains to fully understand the scope of the disclosure. The disclosure is defined by the scope of the appended claims. Like reference numerals refer to like elements throughout the specification.

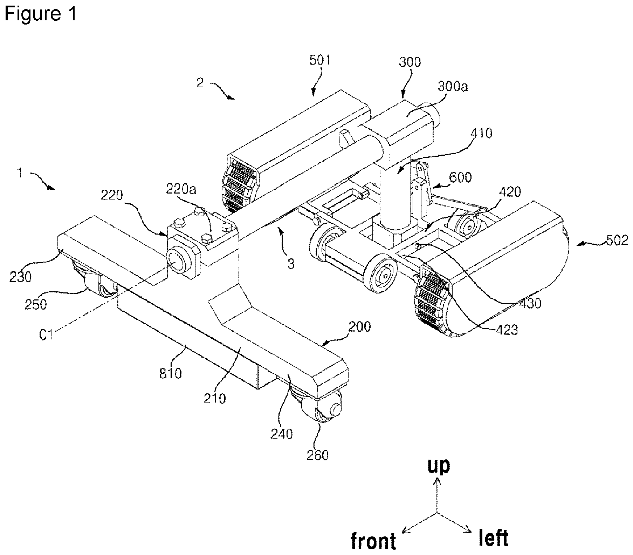

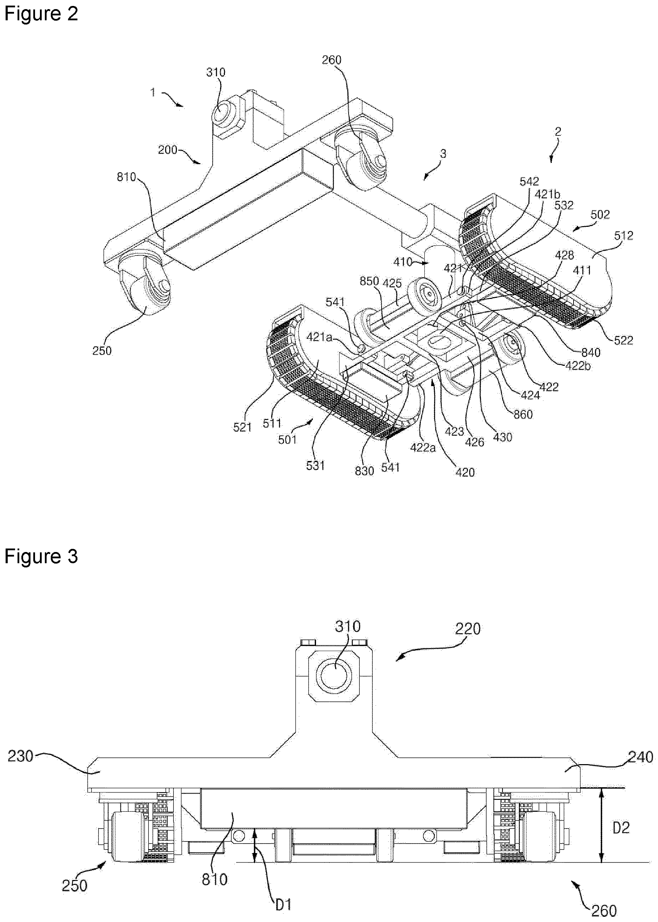

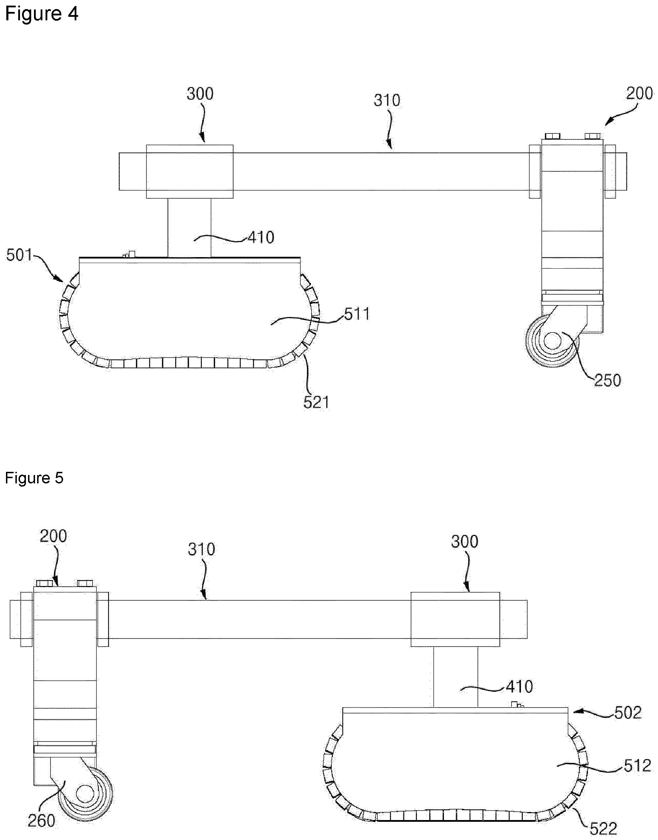

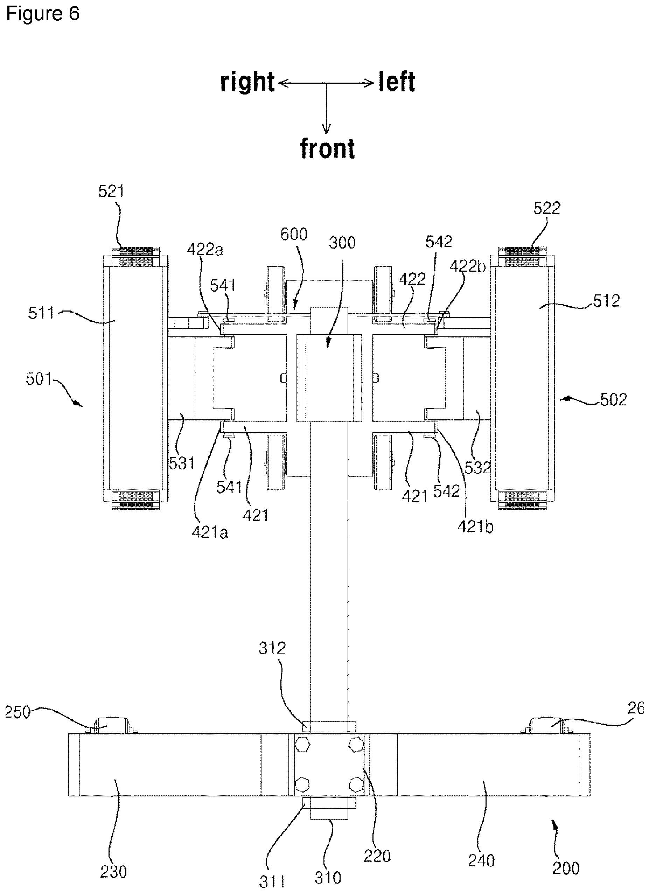

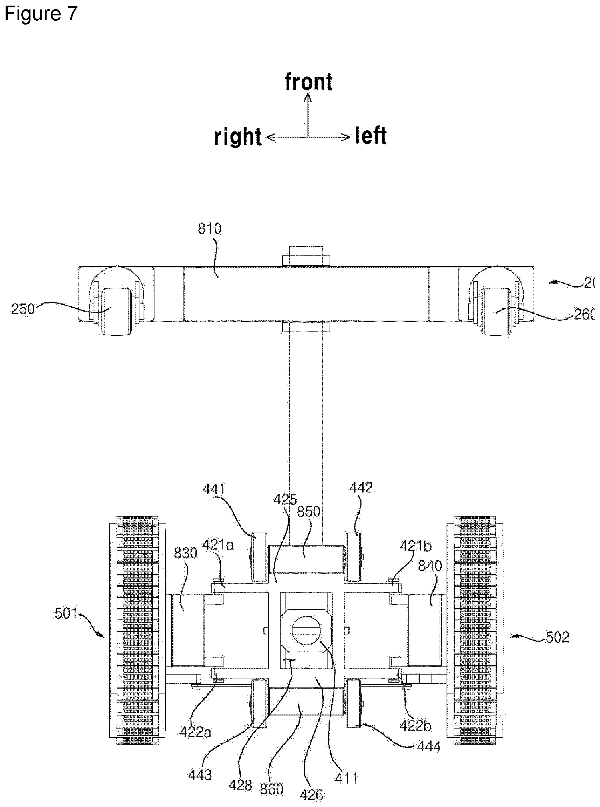

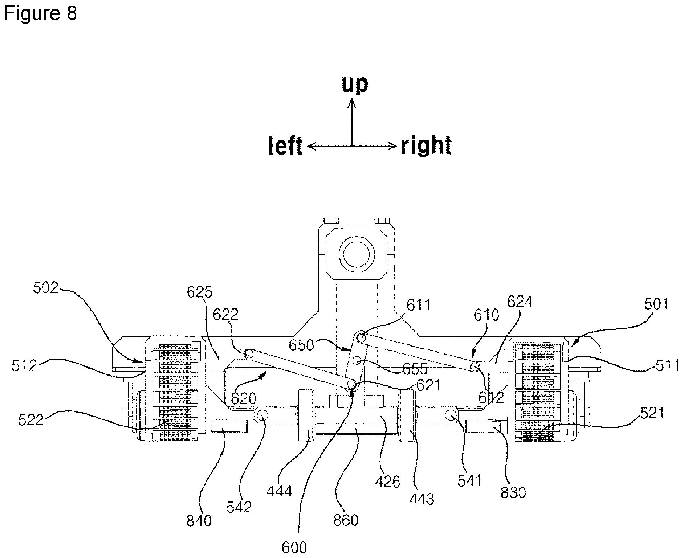

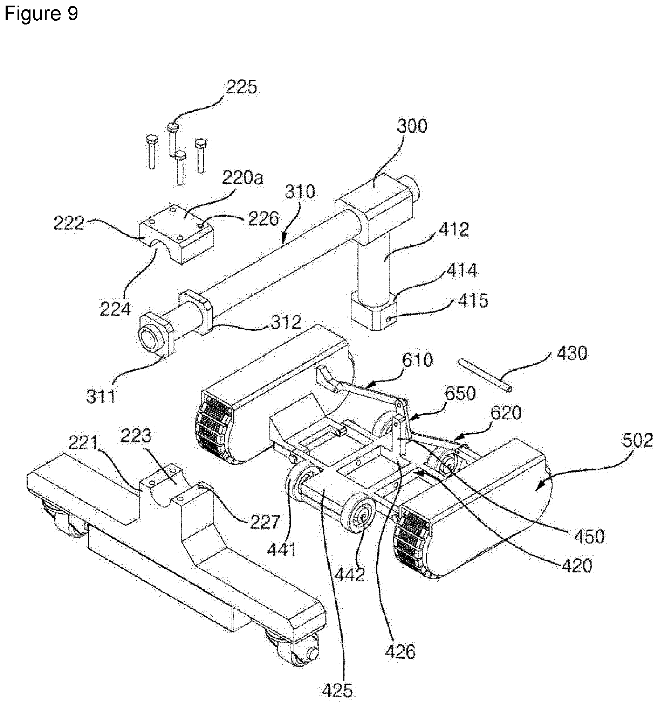

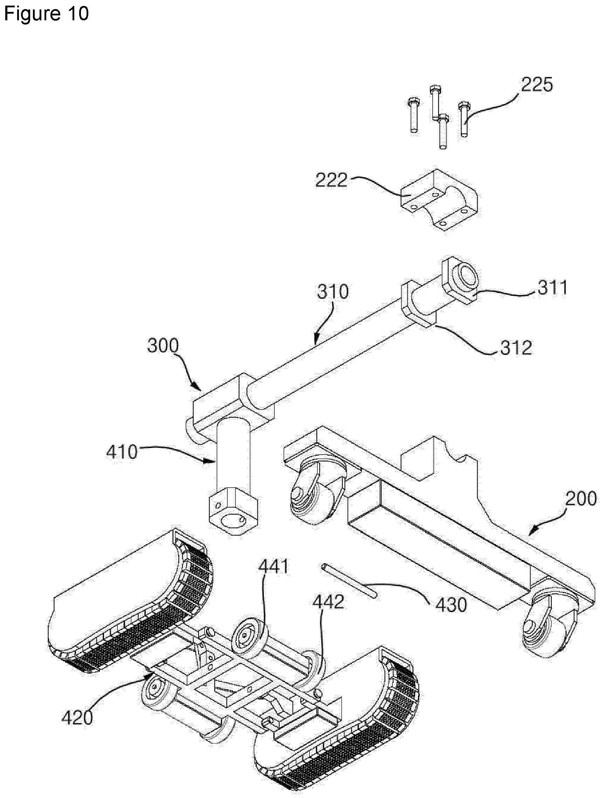

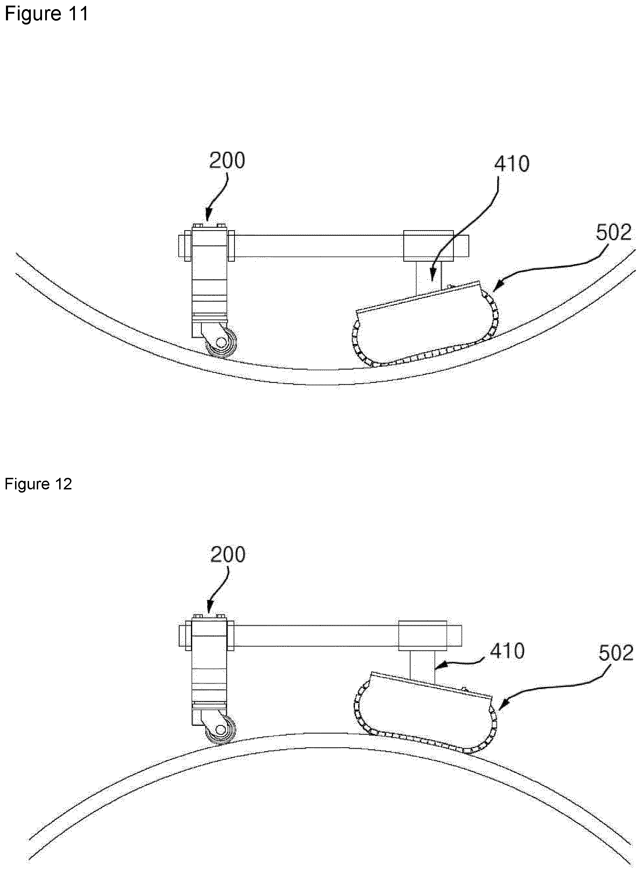

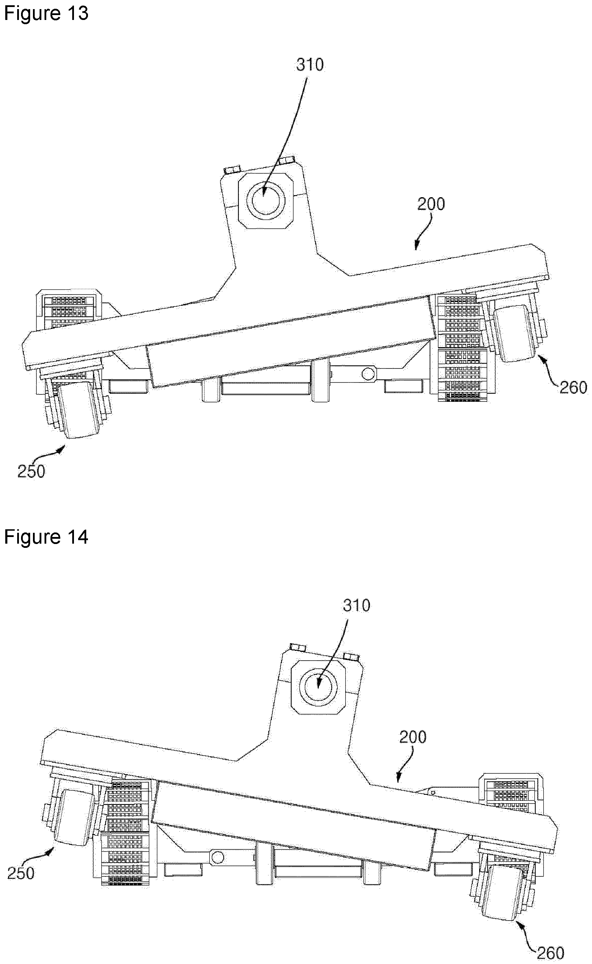

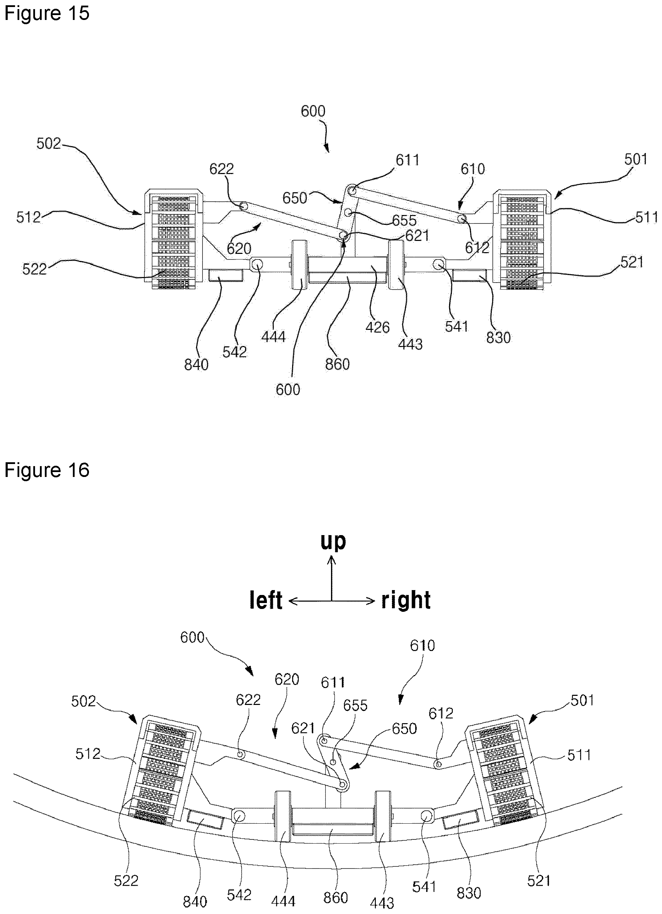

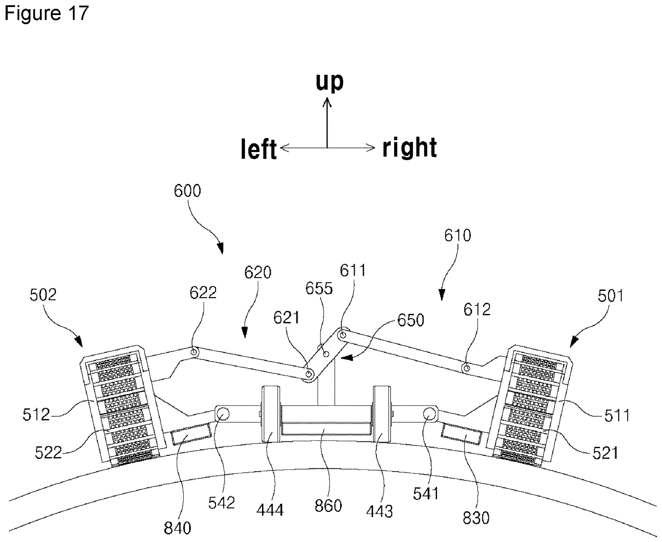

FIG. 1 is a perspective view of a ship cleaning robot according to a first embodiment of the disclosure, FIG. 2 is a perspective view of the ship cleaning robot of FIG. 1, viewed from below, FIG. 3 is a front view of the ship cleaning robot of FIG. 1, FIG. 4 is a left side view of the ship cleaning robot of FIG. 1, FIG. 5 is a right side view of the ship cleaning robot of FIG. 1, FIG. 6 is a plan view of the ship cleaning robot of FIG. 1, FIG. 7 is a bottom view of the ship cleaning robot of FIG. 1, FIG. 8 is a rear view of the ship cleaning robot of FIG. 1, FIG. 9 is an exploded perspective view of the ship cleaning robot of FIG. 1, FIG. 10 is an exploded perspective view of the ship cleaning robot of FIG. 2, FIG. 11 illustrates an example that the ship cleaning robot according to the first embodiment of the disclosure passes a concave surface with respect to forward and backward directions, FIG. 12 illustrates an example that the ship cleaning robot according to the first embodiment of the disclosure passes a convex surface with respect to forward and backward directions, FIG. 13 illustrates a first example that the ship cleaning robot according to the first embodiment of the disclosure is tilted with respect to a body shaft, FIG. 14 illustrates a second example that the ship cleaning robot according to the first embodiment of the disclosure is tilted with respect to a body shaft, FIG. 15 illustrates an example that a stabilizer operates when the ship cleaning robot according to the first embodiment of the disclosure passes a flat surface with respect to left and right directions, FIG. 16 illustrates an example that a stabilizer operates when the ship cleaning robot according to the first embodiment of the disclosure passes a concave surface with respect to left and right directions, and FIG. 17 illustrates an example that a stabilizer operates when the ship cleaning robot according to the first embodiment of the disclosure passes a convex surface with respect to left and right directions

According to an embodiment, the ship cleaning robot includes a front module 1, a rear module 2 disposed behind the front module 1, and an upper module 3 tiltably connecting the front module 1 and the rear module 2.

The front module 1 may include a front body 200.

The rear module 2 may include a rear horizontal body 420, a first caterpillar module 501, and a second caterpillar module 502.

A cleaning module (not shown) for cleaning the outer surface of a ship may be provided in at least one of the front module 1 or the rear module 2.

The upper module 3 may include a body shaft 310 connecting the front body 200 and a connection body 300, the connection body 300 coupled to a rear end of the body shaft 310, and a connection vertical body 410 coupled to a lower side of the connection body 300.

The ship cleaning robot includes the front body 200; the body shaft 310 disposed in the forward and backward directions and rotatably coupled to the front body 200; the connection body 300 disposed behind the front body 200 and disposed at a rear end of the body shaft 310; the connection vertical body 410 coupled to the connection body 300 and disposed in a vertical direction; the rear horizontal body 420 coupled to the connection vertical body 410 tiltably with respect to a rear horizontal shaft 430 and extended from the connection vertical body 410 leftwards and rightwards; the first caterpillar module 501 disposed at a right side of the rear horizontal body 420, assembled to be rotatable relative to the rear horizontal body 420 in the vertical direction, and providing propulsive force to move on a hull; the second caterpillar module 502 disposed at a left side of the rear horizontal body 420, assembled to be rotatable relative to the rear horizontal body 420 in the vertical direction, and providing the propulsive force to move on the hull; and a stabilizer 600 disposed in the rear horizontal body 420 and rotating the first caterpillar module 501 and the second caterpillar module 502.

Further, the ship cleaning robot includes a front magnet 810 disposed on a lower surface of the front body 200 and generating attractive force to the outer metal wall of a ship based on magnetic force; a first rear magnet 830 disposed on a left lower surface of the rear horizontal body 420 and generating attractive force to the outer metal wall of the ship based on magnetic force; a second rear magnet 840 disposed on a right lower surface of the rear horizontal body 420 and generating attractive force to the outer metal wall of the ship based on magnetic force; a third rear magnet 850 disposed on a front lower surface of the rear horizontal body 420; and a fourth rear magnet 860 disposed on a rear lower surface of the rear horizontal body 420.

The front body 200 includes a lower front portion 210 provided with the front magnet 810, an upper front portion 220 formed protruding from the lower front portion 210 upwards and rotatably coupled to the connection body 300, and front wings 234 and 240 formed protruding from at least one of the lower front portion 210 or the upper front portion 220 laterally.

The front magnet 810 is disposed on the lower end of the lower front portion 210.

In this embodiment, the horizontal width of the front magnet 810 is larger than the horizontal width of the upper front portion 220 and smaller than the horizontal width of the lower front portion 210.

When viewed from the front, the front magnet 810 is disposed to have bilateral symmetry with respect to an axial direction C1 of the body shaft 310.

The bottom of the front magnet 810 is spaced apart from the floor by a first spacing distance D1.

The first spacing distance D1 is formed between the front magnet 810 and the outer wall of a hull. The first spacing distance D1 is formed to make the magnetic force provided by the front magnet 810 be strong enough to prevent the front body 200 from being separated from the outer wall of the hull.

In this embodiment, the front wings 230 and 240 may protrude and extend from the lower front portion 210 rightwards and leftwards, respectively. In this embodiment, the rightward protrusion will be referred to as a first front wing 230, and the leftward protrusion will be referred to as a second front wing 240.

A first front wheel 250 is disposed under the first front wing 230, and a second front wheel 260 is disposed under the second front wing 240.

The first front wheel 250 and the second front wheel 260 reduce friction while the robot travels, thereby decreasing load due to actuation of the caterpillar modules 501 and 502. The first front wheel 250 and the second front wheel 260 have a structure for rotating 360 degrees on a plane.

The lower ends of the first front wing 230 and the second front wing 240 form a second spacing distance D2 from the outer wall of a hull. The second spacing distance D2 is longer than the first spacing distance D1, thereby securing a sufficient installation space for the first front wheel 250 and the second front wheel 260.

The connection body 300 is assembled to be rotatable relative to the upper front portion 220 through the body shaft 310. The axial direction C1 of the body shaft 310 is disposed in the forward and backward directions.

In this embodiment, the body shaft 310 is shaped like a cylinder, having a front end rotatably assembled to the upper front portion 220 and a rear end coupled to the connection body 300.

The upper front portion 220 is manufactured in two pieces so that the body shaft 310 can be rotatably coupled thereto.

The upper front portion 220 includes a first upper front portion 221 extended from the lower front portion 210 upwards, a second upper front portion 222 detachably coupled to the first upper front portion 221, a lower groove 223 recessed downwards on an upper surface of the first upper front portion 221 and inserting a lower portion of the body shaft 310 therein, and an upper groove 224 recessed upwards on an lower surface of the second upper front portion 222 and inserting an upper portion of the body shaft 310 therein.

The first upper front portion 221 and the second upper front portion 222 may be coupled by a fastening member 225. When the fastening member 225 is loosened, the second upper front portion 222 may be separated upwards.

The first upper front portion 221 and the second upper front portion 222 are coupled so that the lower groove 223 and the upper groove 224 can form a circle when viewed from the front.

The upper front portion 220 further includes a fastening hole 226 formed penetrating the second upper front portion 222 in a vertical direction, and a fastening groove 227 recessed downwards on the upper surface of the first upper front portion 221, so that the fastening member 225 can be fastened to the fastening groove 227 through the fastening hole 226.

To prevent the body shaft 310 from being separated from the upper front portion 220, the body shaft 310 may further include a first coupling guide 311 protruding from a front outer circumferential surface outwards in a radial direction, and a second coupling guide 312 disposed to be spaced backward apart from the first coupling guide 311 and protruding outward in the radial direction of the body shaft 310.

The first coupling guide 311 and the second coupling guide 312 are disposed to be spaced apart from each other in the forward and backward directions.

In this embodiment, the first coupling guide 311 is in close contact with the front side of the upper front portion 220, and the second coupling guide 312 is in close contact with the rear side of the upper front portion 220.

As the first coupling guide 311 and the second coupling guide 312 are in close contact with the upper front portion 220, the body shaft 310 is prevented from moving the forward and backward directions.

The connection vertical body 410 is coupled to the lower side of the connection body 300.

When viewed from the front, the front body 200 and the connection body 300 may relatively rotate around the body shaft 310 clockwise or counterclockwise.

The body shaft 310 is coupled to the connection body 300 through the upper front portion 220.

The connection vertical body 410 is coupled to the lower side of the connection body 300 and protruding downwards.

The connection vertical body 410 and the rear horizontal body 420 are rotatably assembled by the rear horizontal shaft 430.

In this embodiment, the connection vertical body 410 may be included in the upper module 3, and the rear horizontal body 420 may be included in the rear module 2. Unlike this embodiment, the body shaft 310 may be directly connected to the rear horizontal body 420.

In this embodiment, the connection vertical body 410 protrudes from the lower side of the connection body 300 downwards. In this embodiment, the rear horizontal body 420 is manufactured in the form of a frame.

The connection vertical body 410 includes a first connection vertical body 412 protruding from the lower side of the connection body 300 downwards, and a second connection vertical body 414 disposed below the first connection vertical body 412 and inserted in an insertion space 428 of the rear horizontal body 420 as the rear horizontal shaft 430 horizontally penetrates the second connection vertical body 414.

In this embodiment, the first connection vertical body 412 is shaped like a cylinder.

The second connection vertical body 414 may be provided in the form of a quadrangular block or an octagonal block, the cross section of which corresponds to that of the insertion space 428.

When viewed from above, the insertion space 428 is formed to have a quadrangular shape, and the second connection vertical body 414 is provided in the form of a quadrangular block or an octagonal block.

The second connection vertical body 414 is formed with a shaft hole 415 in which the rear horizontal shaft 430 is inserted.

The rear horizontal shaft 430 is disposed in left and right directions, and the rear horizontal body 420 may rotate around the rear horizontal shaft 430 by a predetermine angle in the vertical direction.

Because the first caterpillar module 501 and the second caterpillar module 502 are coupled to the rear horizontal body 420, both the first caterpillar module 501 and the second caterpillar module 502 may rotate by a predetermined angle in the vertical direction as the rear horizontal body 420 rotates in the vertical direction.

Through the rotation of the rear horizontal body 420 around the rear horizontal shaft 430, the first caterpillar module 501 and the second caterpillar module 502 can more easily cope with curves encountered during movement.

Specifically, while the first caterpillar module 501 and the second caterpillar module 502 move forwards, the rear horizontal body 420 rotates in the vertical direction, thereby allowing the ship cleaning robot to more easily pass attachments on the outer wall of the ship.

In this embodiment, the rear horizontal body 420 is formed to have a " 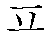 "-shape.

The rear horizontal body 420 includes a first horizontal portion 421 disposed in front of the connection vertical body 410, a second horizontal portion 422 disposed behind the connection vertical body 410 while facing the first horizontal portion 421, a third horizontal portion 423 disposed at a right side of the connection vertical body 410 and connecting the first horizontal portion 421 and the second horizontal portion 422, and a fourth horizontal portion 424 disposed at a left side of the connection vertical body 410 and connecting the first horizontal portion 421 and the second horizontal portion 422.

The rear horizontal body 420 further includes a supporting column 450 to which a main link 650 of the stabilizer 600 (to be described later) is coupled, and the supporting column 450 is disposed from the second horizontal portion 422 upwards.

In this embodiment, a lower end 411 of the connection vertical body 410 is inserted in the insertion space 428 surrounded with the first horizontal portion 421, the second horizontal portion 422, the third horizontal portion 423, and the fourth horizontal portion 424.

In the insertion space 428, the lower end 411 of the connection vertical body 410 may rotate around the rear horizontal shaft 430 in the forward and backward directions.

The rear horizontal shaft 430 is disposed to penetrate the third horizontal portion 423, the connection vertical body 410, and the fourth horizontal portion 424.

The first caterpillar module 501 is rotatably coupled to a right end 421a of the first horizontal portion 421 and a right end 422a of the second horizontal portion 422.

The second caterpillar module 502 is rotatably coupled to a left end 421b of the first horizontal portion 421 and a right end 422b of the second horizontal portion 422.

The rear horizontal body 420 additionally includes a front extension portion 425 further extended from the first horizontal portion 421 frontwards, and a rear extension portion 426 further extended from the second horizontal portion 422 backwards.

The ship cleaning robot may additionally include the third rear magnet 850 disposed on the lower surface of the front extension portion 425, and the fourth rear magnet 860 disposed on the lower surface of the rear extension portion 426.

The ship cleaning robot may further include a first auxiliary wheel 441 rotatably disposed at the left side of the front extension portion 425, a second auxiliary wheel 442 rotatably disposed at the right side of the front extension portion 425, a third auxiliary wheel 443 rotatably disposed at the left side of the rear extension portion 426, and a fourth auxiliary wheel 444 rotatably disposed at the right side of the rear extension portion 426.

The lower ends of the first auxiliary wheel 441, the second auxiliary wheel 442, the third auxiliary wheel 443, and the fourth auxiliary wheel 444 are positioned at the same height as those of a first caterpillar 521 and a second caterpillar 522 (to be described later).

As shown in FIG. 8, the first caterpillar module 501 and the second caterpillar module 502 have bilateral symmetry except that a first link 610 rotatably coupled to the main link 650 and a first module casing 511 is different in length from a second link 620 rotatably coupled to the main link 650 and a second module casing 512, and a 1-2 hinge 612 and a 2-2 hinge 622 are different in a coupling position. In this embodiment, this difference is to make the same or similar angle for symmetrical rotation in the vertical direction. In this embodiment, the first link 610 may be longer than the second link 620.

The first caterpillar module 501 and the second caterpillar module 502 receive electric power and provide propulsive force. The first caterpillar module 501 and the second caterpillar module 502 may operate individually, thereby easily implementing the forward and backward movement and direction change of the ship cleaning robot.

In particular, when one of the first caterpillar module 501 and the second caterpillar module 502 is rotated forward and the other one is rotated backward, the direction change is implemented by rotation in place, thereby minimizing the movement radius of the ship cleaning robot, and cleaning a cleaning zone more thoroughly.

The first caterpillar module 501 includes the first module casing 511 extended long in the forward and backward directions and opened downward, the first caterpillar 521 disposed inside the first module casing 511 and forming continuous tracks in the forward and backward directions, a first caterpillar actuator (not shown) disposed inside the first module casing 511 and circulating the first caterpillar 521, and a first module rotator 531 disposed in the first module casing 511 and rotatably coupled to the rear horizontal body 420.

In this embodiment, the first module rotator 531 is rotatably coupled to a right end 421a of the first horizontal portion 421 and a right end 422a of the second horizontal portion 422 through a first module rotary shaft 541.

The first rear magnet 830 is disposed on the lower surface of the first module rotator 531.

The second caterpillar module 502 includes the second module casing 512 extended long in the forward and backward directions and opened downward, the second caterpillar 522 disposed inside the second module casing 512 and forming continuous tracks in the forward and backward directions, a second caterpillar actuator (not shown) disposed inside the second module casing 512 and circulating the second caterpillar 522, and a second module rotator 532 disposed in the second module casing 512 and rotatably coupled to the rear horizontal body 420.

In this embodiment, the second module rotator 532 is rotatably coupled to a left end 421b of the first horizontal portion 421 and a left end 422b of the second horizontal portion 422 through a second module rotary shaft 542.

The second rear magnet 840 is disposed on the lower surface of the second module rotator 532.

Regardless of the position of the caterpillar module, the auxiliary wheels may always be supported on the outer wall of the ship.

The first auxiliary wheel 441, the second auxiliary wheel 442, the third auxiliary wheel 443, and the fourth auxiliary wheel 444 form a spacing distance to prevent the third rear magnet 850 and the fourth rear magnet 860 positioned on the lower surface of the rear horizontal body 420 from coming into direct contact with the outer wall of the ship the spacing distance, and implement rolling resistance to enable the robot to smoothly travel.

The stabilizer 600 includes the main link 650 rotatably disposed in the supporting column 450, a main link shaft 655 rotatably connecting the main link 650 and the supporting column 450, the first link 610 rotatably coupled to the main link 650 and the first module casing 511, the second link 620 rotatably coupled to the main link 650 and the second module casing 512, a 1-1 hinge 611 rotatably connecting the main link 650 and the first link 610, the 1-2 hinge 612 rotatably connecting the first link 610 and the first module casing 511, a 2-1 hinge 621 rotatably connecting the main link 650 and the second link 620, and the 2-2 hinge 622 rotatably connecting the second link 620 and the second module casing 512.

The main link 650 is disposed behind the supporting column 450, and the main link shaft 655 is coupled to the supporting column 450 in the forward and backward directions.

The main link 650 may rotate around the main link shaft 655 clockwise or counterclockwise. The rotation of the main link 650 is implemented by the high and low positions of the first caterpillar module 501 and the second caterpillar module 502.

According to an embodiment, the ship cleaning robot further includes a first link bracket 624 protruding from the first module casing 511 to the main link shaft 655, and a second link bracket 625 protruding from the first module casing 512 to the main link shaft 655.

The first link bracket 624 and the second link bracket 625 may be shaped to have point symmetry with respect to the main link shaft 655. The first link bracket 624 and the second link bracket 625 are disposed to have the point symmetry with respect to the main link shaft 655, thereby implementing vertically symmetrical rotation.

The first caterpillar module 501 may rotate clockwise or counterclockwise with respect to the first module rotary shaft 541 of the lower side and the 1-2 hinge 612 of the upper side. The second caterpillar module 502 may rotate clockwise or counterclockwise with respect to the second module rotary shaft 542 of the lower side and the 2-2 hinge 622 of the upper side.

The first caterpillar module 501 and the second caterpillar module 502 are symmetrically rotated by the curves formed on the outer wall of a ship, thereby coming into close contact with the curves of the ship.

Referring to FIGS. 5 or 15, the first caterpillar module 501 and the second caterpillar module 502 may be horizontally arranged while passing a surface that is flat when viewed from the front.

As shown in FIG. 11, the first caterpillar module 501 and the second caterpillar module 502 are rotated around the rear horizontal shaft 430 while passing a surface that is concave when viewed from the side of the ship cleaning robot according to an embodiment, and therefore a front side is low and a rear side is high.

Referring to FIG. 16, both the first caterpillar module 501 and the second caterpillar module 502 are rotated upwards and arranged in the form of "↖↗" while passing a surface that is concave when viewed from the front of the ship cleaning robot according to an embodiment.

As shown in FIG. 12, the first caterpillar module 501 and the second caterpillar module 502 are rotated around the rear horizontal shaft 430 while passing a surface that is convex when viewed from the side of the ship cleaning robot according to an embodiment, and therefore the front side is high and the rear side is low.

Referring to FIG. 17, both the first caterpillar module 501 and the second caterpillar module 502 are rotated downwards and arranged in the form of "↙ ↘" while passing a surface that is convex when viewed from the front of the ship cleaning robot according to an embodiment.

The stabilizer 600 may support the inner upper side of the first caterpillar module 501 and the second caterpillar module 502 through the main link 650, the first link 610, and the second link 620, thereby bringing the first caterpillar 521 and the second caterpillar 522 into symmetrical close contact with the outer wall of a ship.

Meanwhile, as shown in FIG. 13, when only the second front wheel 260 is passing an obstacle while the ship cleaning robot according to an embodiment travels, the front body 200 is rotated clockwise around the body shaft 310, thereby passing through the obstacle while maintaining the close contact with the ship.

In addition, as shown in FIG. 14, when only the first front wheel 250 is passing an obstacle while the ship cleaning robot according to an embodiment travels, the front body 200 is rotated counterclockwise around the body shaft 310, thereby passing through the obstacle while maintaining the close contact with the ship.

In this way, the ship cleaning robot according to an embodiment maintains close contact with the surface of a ship as much as possible, and minimizes separation from the surface of a ship while passing various curves and obstacles of the ship.

It is to be appreciated by a person having ordinary knowledge in the art to which the disclosure pertains that change or modification can be made in the embodiments without departing from the technical spirit and essential features of the disclosure. Accordingly, it should be understood that the foregoing embodiments are essentially for illustrative purpose only but not in any way for restriction thereto. Thus, the scope of the disclosure should be determined by the appended claims and their legal equivalents rather than the detailed description, and various alterations and modifications within the definition and scope of the claims are included in the claims.

### (Reference Numerals)

| | | | |
|---|---|---|---|
| 200 : | front body | 210 : | lower front portion |
| 220 : | upper front portion | 300 : | connection body |
| 410 : | connection vertical body | 420 : | rear horizontal body |
| 501 : | first caterpillar module | 502: | second caterpillar module |
| 600 : | stabilizer | | |

## Claims

1. A ship cleaning robot comprising:
a rear horizontal body 420;
a first caterpillar module 501 disposed at a right side of the rear horizontal body 420, assembled to be rotatable relative to the rear horizontal body 420 in a vertical direction, and providing propulsive force to move on a hull;
a second caterpillar module 502 disposed at a left side of the rear horizontal body 420, assembled to be rotatable relative to the rear horizontal body 420 in the vertical direction, and providing propulsive force to move on the hull; and
a stabilizer 600 disposed in the rear horizontal body 420, and allowing the first caterpillar module 501 and the second caterpillar module 502 to symmetrically rotate in the vertical direction.

2. The ship cleaning robot of claim 1, wherein
the first caterpillar module 501 is disposed to be rotatable in the vertical direction through a first module rotary shaft 541 disposed at the right side of the rear horizontal body 420, and
the second caterpillar module 502 is disposed to be rotatable in the vertical direction through a second module rotary shaft 542 disposed at the left side of the rear horizontal body 420.

3. The ship cleaning robot of claim 2, wherein
the first caterpillar module 501 comprises:
a first module casing 511 extended in forward and backward directions and opened downwards;
a first caterpillar 521 disposed inside the first module casing 511 and forming continuous tracks in the forward and backward directions;
a first caterpillar actuator disposed inside the first module casing 511 and circulating the first caterpillar 521; and
a first module rotator 531 disposed in the first module casing 511 and rotatably assembled with the rear horizontal body 420, and
the first module rotary shaft 541 is rotatably assembled with the first module rotator 531, and the first module rotary shaft 541 is disposed in the forward and backward directions.

4. The ship cleaning robot of claim 3, wherein
a first rear magnet 830 is disposed under the first module rotator 531, and the first rear magnet 830 is disposed at a right side of the first module rotary shaft 541.

5. The ship cleaning robot of claim 2, wherein
the second caterpillar module 502 comprises:
a second module casing 512 extended in forward and backward directions and opened downwards;
a second caterpillar 522 disposed inside the second module casing 512 and forming continuous tracks in the forward and backward directions;
a second caterpillar actuator disposed inside the second module casing 512 and circulating the second caterpillar 522; and
a second module rotator 532 disposed in the second module casing 512 and rotatably assembled with the rear horizontal body 420, and
the second module rotary shaft 542 is rotatably assembled with the second module rotator 532, and the second module rotary shaft 542 is disposed in the forward and backward directions.

6. The ship cleaning robot of claim 5, wherein
a second rear magnet 840 is disposed under the second module rotator 532, and the second rear magnet 840 is disposed at a left side of the second module rotary shaft 542.

7. The ship cleaning robot of claim 1, wherein
the first caterpillar module 501 comprises: a first module casing 511 extended in forward and backward directions and opened downwards; a first caterpillar 521 disposed inside the first module casing 511 and forming continuous tracks in the forward and backward directions; a first caterpillar actuator disposed inside the first module casing 511 and circulating the first caterpillar 521; and a first module rotator 531 disposed in the first module casing 511 and rotatably assembled with the rear horizontal body 420, and
the second caterpillar module 502 comprises: a second module casing 512 extended in forward and backward directions and opened downwards; a second caterpillar 522 disposed inside the second module casing 512 and forming continuous tracks in the forward and backward directions; a second caterpillar actuator disposed inside the second module casing 512 and circulating the second caterpillar 522; and a second module rotator 532 disposed in the second module casing 512 and rotatably assembled with the rear horizontal body 420.

8. The ship cleaning robot of claim 7, wherein
the rear horizontal body 420 further comprises a supporting column 450 disposed to protrude upwards, and
the stabilizer 600 comprises:
a main link 650 rotatably disposed in the supporting column 450;
a main link shaft 655 rotatably connecting the main link 650 and the supporting column 450;
a first link 610 rotatably connected to the main link 650 and the first module casing 511;
a second link 620 rotatably coupled to the main link 650 and the second module casing 512;
a 1-1 hinge 611 rotatably connecting the main link 650 and the first link 610;
a 1-2 hinge 612 rotatably connecting the first link 610 and the first module casing 511;
a 2-1 hinge 621 rotatably connecting the main link 650 and the second link 620; and
a 2-2 hinge 622 rotatably connecting the second link 620 and the second module casing 512.

9. The ship cleaning robot of claim 8, wherein
the 1-2 hinge 612 is disposed above the first module rotary shaft 541,
the 2-2 hinge 622 is disposed above the second module rotary shaft 542.

10. The ship cleaning robot of claim 1, further comprising:
a front body 200 disposed in front of the rear horizontal body 420;
a body shaft 310 rotatably assembled with the front body 200;
a body shaft 310 rotatably assembled with the front body 200; and
a connection body 300 disposed behind the body shaft 310 and connecting the rear horizontal body 420 and the body shaft 310,
wherein the body shaft 310 is disposed in the forward and backward directions, and
wherein the front body 200 is rotatable around the body shaft 310 clockwise or counterclockwise when viewed from the front.

11. The ship cleaning robot of claim 10, further comprising:
a connection vertical body 410 coupled to the connection body 300 and disposed in the vertical direction,
wherein the rear horizontal body 420 is assembled to the connection vertical body 410 and tiltable with respect to the rear horizontal shaft 430, and extended from the connection vertical body 410 leftwards and rightwards, and
wherein the rear horizontal shaft 430 is disposed in left and right directions, when viewed from the front, and the connection vertical body 410 is rotated around the rear horizontal shaft 430 in the forward and backward directions.

12. The ship cleaning robot of claim 11, further comprising:
a third rear magnet 850 disposed under a front extension portion 425 of the rear horizontal body 420; and
a fourth rear magnet 860 disposed under a rear extension portion 426 of the rear horizontal body 420.

13. The ship cleaning robot of claim 10, wherein
the front body 200 comprises:
a lower front portion 210 under which a front magnet 810 is installed;
an upper front portion 220 formed protruding from the lower front portion 210 upwards and rotatably coupling with the connection body 300; and
front wings 230 and 240 formed protruding from at least one of the lower front portion 210 or the upper front portion 220 laterally.

14. The ship cleaning robot of claim 13, wherein
the upper front portion 220 comprises:
a first upper front portion 221 extended from the lower front portion 210 upwards;
a second upper front portion 222 detachably coupled to the first upper front portion 221;
a lower groove 223 recessed downwards on an upper surface of the first upper front portion 221 and inserting a lower portion of the body shaft 310 therein, and
an upper groove 224 recessed upwards on a lower surface of the second upper front portion 222 and inserting an upper portion of the body shaft 310 therein.

15. The ship cleaning robot of claim 14, further comprising:
a first coupling guide 311 protruding from a front outer circumferential surface of the body shaft 310 outwards in a radial direction; and
a second coupling guide 312 disposed to be spaced backward apart from the first coupling guide 311 and protruding outward in the radial direction of the body shaft 310.
